# EUROPEAN PATENT APPLICATION

(11) **EP 4 794 312 A1**
(43) Date of publication of application: **19.08.2026**
(21) Application number: 24881377.6
(22) Date of filing: 29.09.2024
(51) Int. Cl.: H04L 69/08

(54) **COMMUNICATION APPARATUS, COMMUNICATION METHOD, COMMUNICATION DEVICE, AND PASSIVE OPTICAL NETWORK**

(30) Priority: 27.10.2023 CN 202311414899
(71) Applicant: HUAWEI TECHNOLOGIES CO., LTD., Shenzhen 518129 (CN)
(72) Inventor: SUN, Xiaoguang, Shenzhen, Guangdong 518129 (CN)
(74) Representative: Maiwald GmbH
(86) International application number: PCT/CN2024/122507
(87) International publication number: WO 2025/087011

(57) **Abstract**

Provided are a communication apparatus, a communication method, a communication device, and a passive optical network, relating to the communication field, capable of parsing a packet from a received signal corresponding to a communication protocol, converting the packet into a signal corresponding to another communication protocol, and outputting the converted signal. The communication apparatus includes: a first interface, a processing circuit, a PON circuit, and a second interface. The processing circuit is separately coupled to the first interface and the PON circuit, and the PON circuit is coupled to the second interface. The first interface is used for the communication device and is specifically configured to receive a first signal transmitted by the communication device, and parse a first packet from the first signal, where the first packet includes a packet of a first communication protocol. The processing circuit is configured to convert the first packet into a second packet, where the second packet includes a packet of a second communication protocol. The PON circuit is configured to convert the second packet into a second signal. The second interface is configured to be coupled to the passive optical network, and is specifically configured to transmit the second signal to the passive optical network. Embodiments of this application are applied to the communication field.

## Description

This application claims priority to Chinese Patent Application No. 202311414899.7, filed with the China National Intellectual Property Administration on October 27, 2023 and entitled "COMMUNICATION APPARATUS, COMMUNICATION METHOD, COMMUNICATION DEVICE, AND PASSIVE OPTICAL NETWORK", which is incorporated herein by reference in its entirety.

### TECHNICAL FIELD

Embodiments of this application relate to the communication field, and in particular, to a communication apparatus, a communication method, a communication device, and a passive optical network.

### BACKGROUND

In a traditional network architecture, an access network (radio access network, RAN) mainly includes a baseband unit (baseband unit, BBU), a remote radio unit (remote radio unit, RRU), and an antenna (antenna unit, AU). In 5G scenarios, as transmission signal frequencies increase, bandwidth and a quantity of channels also increase greatly. To address these demands, a plurality of BBUs are centralized in a central office (central office, CO), whereas RRUs are deployed on remote signal towers or poles. Each BBU in the C0 is connected to an RRU via one or more optical fibers. This deployment solution is referred to as centralized radio access network (centralized radio access network, C-RAN). In the C-RAN deployment solution, an RRU is located closer to an AU, allowing the RRU and the AU to be integrated into a large-scale active antenna unit (active antenna unit, AAU).

In practice, RRUs are commonly deployed using traditional macro sites (for example, tower sites). However, many scenarios pose challenges for such deployments. For example, in an ancient town scenic area, it is challenging to deploy traditional macro sites due to the age of buildings in the ancient town scenic area, their limited load-bearing capacity, small installation space, and stringent aesthetic requirements for deployed devices. Consequently, in environments like commercial streets, residential areas, and plazas, pole micro sites (such as EasyMacro and BookRRU) have emerged as an alternative solution for RRU deployment. These pole micro sites typically implement either an outdoor coverage solution or an indoor coverage solution for a residential area. In the outdoor coverage solution, the pole micro sites are deployed outside a residential area, allowing signal coverage to surround the residential area, thereby improving signal coverage in the residential area. However, since the pole micro sites are deployed outside the residential area, a signal needs to penetrate walls multiple times (each wall penetration causes a specific degree of loss), resulting in high signal loss. In addition, the limited coverage of pole micro sites results 9in insufficient indoor signal coverage depth. In the indoor coverage solution, the pole micro sites are deployed within a residential area, which improves the signal coverage depth. However, because RRUs and BBUs (that is, the pole micro sites) need to be connected via optical fibers, this solution requires optical fiber deployment. This presents significant construction challenges (for example, deploying optical fibers in an old residential area requires excavation) and high deployment costs.

### SUMMARY

This application provides a communication apparatus, a communication method, a communication device, and a passive optical network, designed to parse a packet from a received signal corresponding to a communication protocol, convert the packet into a signal corresponding to another communication protocol, and output the converted signal.

According to a first aspect, a communication apparatus is provided. The communication apparatus includes: a first interface, a processing circuit, a PON circuit, and a second interface. The processing circuit is separately coupled to the first interface and the PON circuit, and the PON circuit is coupled to the second interface. The first interface is used for a communication device and is specifically configured to: receive a first signal transmitted by the communication device, and parse a first packet from the first signal, where the first packet includes a packet of a first communication protocol. The processing circuit is configured to convert the first packet into a second packet, where the second packet includes a packet of a second communication protocol. The PON circuit is configured to convert the second packet into a second signal. The second interface is configured to be coupled to a passive optical network, and is specifically configured to transmit the second signal to the passive optical network.

In this case, the communication apparatus in the foregoing solution can parse, from the signal received from the communication device, the packet of the first communication protocol that is included in the signal, convert the packet obtained through parsing into a new packet that includes the packet of the second communication protocol, convert the new packet into a corresponding signal, and output the corresponding signal to the passive optical network. Specifically, the communication apparatus in this solution can convert a packet of a communication protocol corresponding to the communication device into a packet of a communication protocol corresponding to the passive optical network, to implement protocol conversion of the packet. Generally, signal transmission between communication devices is mainly implemented via a cable or in a wireless manner, and an optical fiber is used as a transmission medium in the passive optical network to implement signal transmission. Therefore, the communication device and the passive optical network have different transmission media, and the communication protocol corresponding to the communication device is different from the communication protocol corresponding to the passive optical network, so that signal transmission cannot be implemented. In this case, based on the communication apparatus in the foregoing solution, through communication protocol conversion, a packet in a signal transmitted by the communication device can be converted into a packet in a signal transmitted by the passive optical network. In this way, signal transmission can be performed between the communication device and the passive optical network, thereby implementing communication and improving signal transmission quality and efficiency. Generally, a corresponding network architecture has been deployed in the passive optical network. Further, according to this solution, signal transmission between communication devices in this solution can be implemented based on the existing network architecture of the passive optical network, without a need to deploy an additional device and cable, thereby achieving higher compatibility and effectively reducing deployment costs of a communication network.

In a possible implementation, the first communication protocol is different from the second communication protocol.

In this case, in the foregoing solution, a packet of one communication protocol can be converted into a packet of another communication protocol, to implement communication protocol conversion of the packet. Based on the packet in which communication protocol conversion has been completed, signal transmission can be implemented between devices or networks corresponding to different communication protocols. In addition, signal transmission between two different devices or networks can be implemented based on a network architecture corresponding to one of the devices or networks. In this case, according to the foregoing solution, packet conversion between two different communication protocols can be first completed, so that signal transmission can be implemented between devices or networks respectively corresponding to the two communication protocols, and signal transmission of the two communication protocols can be implemented based on one network architecture, thereby improving compatibility of the device or the network.

In a possible implementation, the first communication protocol includes a common public radio interface protocol, and the second communication protocol includes an Ethernet protocol.

In this case, in the foregoing solution, a packet of the common public radio interface protocol can be converted into a packet of the Ethernet protocol, to implement communication protocol conversion of the packet. Further, signal transmission between the two communication protocols can be implemented by using a device or a network corresponding to each of the public radio interface protocol and the Ethernet protocol. In addition, because the public radio interface protocol and the Ethernet protocol each include different devices or networks, signal transmission of the public radio interface protocol and the Ethernet protocol can be implemented based on any network architecture corresponding to the public radio interface protocol or the Ethernet protocol in the foregoing solution. In this case, according to the foregoing solution, packet conversion between the public radio interface protocol and the Ethernet protocol can be completed, so that signal transmission can be implemented between the two communication protocols, and the signal transmission of the two communication protocols can be implemented based on one network architecture of the public radio interface protocol or the Ethernet protocol.

In a possible implementation, the communication device includes a baseband unit or a remote radio unit.

Therefore, the foregoing solution can be applied to the baseband unit or the remote radio unit. Generally, an architecture of an access network includes a baseband unit and a remote radio unit, and the baseband unit and the remote radio unit need to be connected via an optical fiber to implement signal transmission. In this case, according to the foregoing solution, signal transmission between the baseband unit and the remote radio unit can be implemented based on the network architecture of the passive optical network, and no optical fiber needs to be deployed, thereby reducing construction challenging or deployment costs. For example, deploying optical fibers in a residential area usually requires excavation, which is challenging and costly.

In a possible implementation, the communication device includes the baseband unit, and the PON circuit is specifically configured to perform an optical line terminal function to convert the second packet into the second signal.

Therefore, the foregoing solution can be applied to the baseband unit, and the optical line terminal function is performed by using the PON circuit in the communication apparatus, to convert a packet into a corresponding signal. For example, when the communication apparatus has completed communication protocol conversion for a packet in a signal sent by the baseband unit, a packet of a public radio interface protocol parsed out from the signal sent by the baseband unit is converted into a packet of an Ethernet protocol. However, the packet cannot be directly output to the passive optical network, and it is difficult to implement signal transmission between the communication device and the passive optical network. Therefore, the optical line terminal function needs to be performed by using the PON circuit in the communication apparatus, to convert the packet of the Ethernet protocol into a corresponding signal, and then output the signal to the passive optical network, so as to implement signal transmission between the two communication protocols. The optical line terminal function performed by the PON circuit includes: supporting a point-to-multipoint (point to multipoint, P2MP) transmission technology, controlling, managing, and ranging a customer premises equipment (for example, performing uplink channel bandwidth scheduling on the customer premises equipment), or the like. Therefore, in the foregoing solution, based on the optical line terminal function of the PON circuit in the communication apparatus, the packet of the Ethernet protocol obtained through conversion can be converted into the corresponding signal, to implement signal transmission between two the communication protocols.

In a possible implementation, the communication device includes the remote radio unit, and the PON circuit is specifically configured to perform an optical network unit function to convert the second packet into the second signal.

Therefore, the foregoing solution can be applied to the remote radio unit, and the optical network unit function is performed by using the PON circuit in the communication apparatus, to convert a packet into a corresponding signal. For example, when the communication apparatus has completed communication protocol conversion for a packet in a signal sent by the remote radio unit, a packet of a public radio interface protocol parsed out from the signal sent by the remote radio unit is converted into a packet of an Ethernet protocol. However, the packet cannot be directly output to the passive optical network, and it is difficult to implement signal transmission between the communication device and the passive optical network. Therefore, the optical network unit function needs to be performed by using the PON circuit in the communication apparatus, to convert the packet of the Ethernet protocol into a corresponding signal, and then output the signal to the passive optical network, so as to implement signal transmission between the two communication protocols. Therefore, in the foregoing solution, based on the optical network unit function of the PON circuit in the communication apparatus, the packet of the Ethernet protocol obtained through conversion can be converted into the corresponding signal, to implement signal transmission between two the communication protocols. In addition, point-to-point signal transmission is usually implemented by merely reusing a corresponding network architecture. For example, one BBU can perform point-to-point signal transmission with one RRU by reusing a corresponding network architecture. However, based on the communication apparatus in the foregoing solution, one communication apparatus provided in the foregoing solution is deployed on the BBU side to perform the optical line terminal function, and a plurality of communication apparatuses provided in the foregoing solution are deployed on the RRU side to perform the optical network unit function, so that point-to-multipoint transmission can be implemented by reusing the corresponding network architecture, that is, one BBU can perform point-to-multipoint signal transmission with the plurality of RRUs.

In a possible implementation, the communication apparatus further includes a control circuit. The control circuit is connected to the processing circuit, and is configured to control the communication apparatus to implement one or more of the following functions: startup, software loading, and upgrade.

In this case, in the foregoing solution, startup, software loading, and upgrade of the communication apparatus may be further controlled by using the control circuit connected to the processing circuit. In a possible implementation, signal transmission needs to be performed between the communication device and the passive optical network only in a fixed time period. In this case, the control circuit in the communication apparatus can control the communication apparatus to start within the fixed time period, to ensure that signal transmission can be performed between the communication device and the passive optical network, and effectively reduce energy consumption. For another example, based on an update of a communication protocol, a technical update of the communication device, and the like, the communication apparatus further needs to perform corresponding software loading and upgrade. In this case, the control circuit in the communication apparatus can control the communication apparatus to perform corresponding software loading and upgrade, thereby ensuring compatibility of the communication apparatus.

According to a second aspect, a communication apparatus is provided. The communication apparatus includes: a first interface, a processing circuit, a PON circuit, and a second interface. The processing circuit is separately coupled to the first interface and the PON circuit, and the PON circuit is coupled to the second interface. The second interface is configured to be coupled to a passive optical network, and is specifically configured to receive a second signal transmitted by the passive optical network, and parse a second packet from the second signal, where the second packet includes a packet of a second communication protocol. The processing circuit is configured to convert the second packet into a first packet, where the first packet includes a packet of a first communication protocol. The PON circuit is configured to convert the first packet into a first signal. The first interface is configured to be coupled to a communication device, and is specifically configured to transmit the first signal to the communication device.

In this case, the communication apparatus in the foregoing solution can parse, from the signal received from the passive optical network, the packet of the second communication protocol that is included in the signal, convert the packet obtained through parsing into a new packet that includes the packet of the first communication protocol, convert the new packet into a corresponding signal, and output the corresponding signal to the communication device. Specifically, the communication apparatus in this solution can convert a packet of a communication protocol corresponding to the passive optical network into a packet of a communication protocol corresponding to the communication device, to implement protocol conversion of the packet. Because the communication device and the passive optical network have different transmission media, and the communication protocol corresponding to the communication device is different from the communication protocol corresponding to the passive optical network, so that signal transmission generally cannot be directly performed. In this case, based on the communication apparatus in the foregoing solution, through communication protocol conversion, a packet in the signal transmitted by the passive optical network can be converted into a packet in a signal transmitted by the communication device, so that signal transmission can be performed between the communication device and the passive optical network.

In a possible implementation, the first communication protocol is different from the second communication protocol.

In a possible implementation, the first communication protocol includes a common public radio interface protocol, and the second communication protocol includes an Ethernet protocol.

In a possible implementation, the communication device includes a baseband unit or a remote radio unit.

In a possible implementation, the communication device includes the baseband unit, and the PON circuit is specifically configured to perform an optical line terminal function to convert the second packet into the second signal.

In a possible implementation, the communication device includes the remote radio unit, and the PON circuit is specifically configured to perform an optical network unit function to convert the second packet into the second signal.

In a possible implementation, the communication apparatus further includes a control circuit. The control circuit is connected to the processing circuit, and is configured to control the communication apparatus to implement one or more of the following functions: startup, software loading, and upgrade.

According to a third aspect, a communication method is provided. The communication method includes: receiving a first signal transmitted by a communication device, and parsing a first packet from the first signal, where the first packet includes a packet of a first communication protocol; converting the first packet into a second packet, where the second packet includes a packet of a second communication protocol; converting the second packet into a second signal; and transmitting the second signal to a passive optical network.

In a possible implementation, the first communication protocol is different from the second communication protocol.

In a possible implementation, the first communication protocol includes a common public radio interface protocol, and the second communication protocol includes an Ethernet protocol.

In a possible implementation, the communication device includes a baseband unit, and converting the second packet into the second signal includes: performing an optical line terminal function to convert the second packet into the second signal.

In a possible implementation, the communication device includes a remote radio unit, and converting the second packet into the second signal includes: performing an optical network unit function to convert the second packet into the second signal.

According to a fourth aspect, a communication method is provided. The communication method includes: receiving a second signal transmitted by a passive optical network, and parsing a second packet from the second signal, where the second packet includes a packet of a second communication protocol; converting the second packet into a first packet, where the first packet includes a packet of a first communication protocol; converting the first packet into a first signal; and transmitting the first signal to a communication device.

In a possible implementation, the first communication protocol is different from the second communication protocol.

In a possible implementation, the first communication protocol includes a common public radio interface protocol, and the second communication protocol includes an Ethernet protocol.

In a possible implementation, the communication device includes a baseband unit, and converting the first packet into the first signal includes: performing an optical line terminal function to convert the first packet into the first signal.

In a possible implementation, the communication device includes a remote radio unit, and converting the first packet into the first signal includes: performing an optical network unit function to convert the first packet into the first signal.

According to a fifth aspect, a communication device is provided. The communication device includes a circuit board, and the communication apparatus according to any one of the first aspect or the second aspect that is disposed on the circuit board.

In a possible implementation, the communication device includes any one of the following: a baseband unit, a remote radio unit, an optical line terminal, and an optical network unit.

According to a sixth aspect, a passive optical network is provided. The passive optical network includes: an optical line terminal, at least one optical network unit, and at least one communication apparatus according to any one of the first aspect or the second aspect.

In a possible implementation, the optical line terminal includes the communication apparatus according to any one of the first aspect or the second aspect, and/or the optical network unit includes the communication apparatus according to any one of the first aspect or the second aspect.

For technical effects of any design manner in the third aspect to the sixth aspect, refer to the technical effects of different design manners in the first aspect and the second aspect. Details are not described herein again.

### BRIEF DESCRIPTION OF DRAWINGS

FIG. 1 is a diagram of a deployment solution of an access network according to an embodiment of this application;
FIG. 2 is a diagram of a C-RAN deployment solution according to an embodiment of this application;
FIG. 3A and FIG. 3B are statistical charts of signal coverage according to an embodiment of this application;
FIG. 4A to FIG. 4C are diagrams of deployment scenarios of pole micro sites according to an embodiment of this application;
FIG. 5 is a diagram of an outside-residential-area coverage solution according to an embodiment of this application;
FIG. 6 is a diagram of an inside-residential-area coverage solution according to an embodiment of this application;
FIG. 7A and FIG. 7B are diagrams of a deployment scenario of an in-residential-area coverage solution according to an embodiment of this application;
FIG. 8 is a statistical chart of deployment costs according to an embodiment of this application;
FIG. 9 is a diagram of networking of a passive optical network according to an embodiment of this application;
FIG. 10 is a diagram of an optical fiber communication network according to an embodiment of this application;
FIG. 11 is a diagram of a communication apparatus according to an embodiment of this application;
FIG. 12 is a diagram of a communication network according to another embodiment of this application;
FIG. 13 is a diagram of a communication network according to still another embodiment of this application;
FIG. 14 is a diagram of a communication network according to yet another embodiment of this application;
FIG. 15 is a diagram of a communication method according to an embodiment of this application;
FIG. 16 is a diagram of a communication apparatus according to another embodiment of this application; and
FIG. 17 is a diagram of a communication apparatus according to still another embodiment of this application.

### DESCRIPTION OF EMBODIMENTS

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used. It should be noted that, in embodiments of this application, a word such as "example" or "for example" is used to represent giving an example, an illustration, or a description. Any embodiment or design scheme described as "example" or "for example" in embodiments of this application shall not be construed as being more preferred or having more advantages than another embodiment or design scheme. To be precise, use of the word such as "example" or "for example" is intended to present a relative concept in a specific manner.

The following describes the technical solutions in embodiments of this application with reference to the accompanying drawings.

An optical fiber communication system has become a mainstream communication system at present, and the optical fiber communication system usually includes a core network (core network, CN), an access network (radio access network, RAN), and the like. An access network RAN in a conventional network architecture mainly includes: a baseband unit BBU, a remote radio unit RRU, and an antenna AU.

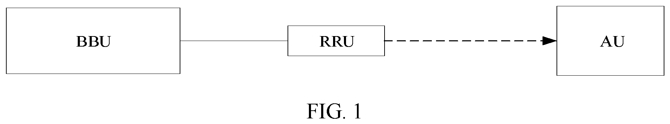

For example, FIG. 1 is a diagram of a deployment solution of an access network according to an embodiment of this application. In this architecture, each office is equipped with a BBU and an RRU that are connected via a coaxial cable, and a transmission signal is sent by the RRU to an AU in a wireless manner. This RAN deployment solution is referred to as a distributed radio access network (distributed radio access network, D-RAN).

When a plurality of BBUs need to be deployed, an operator independently deploys the plurality of BBUs, which results in high deployment costs (for example, a site rent). Therefore, the plurality of BBUs need to be centralized in a central office (central office, CO) to reduce deployment costs. The RRU is deployed on a remote signal tower, and each BBU in the C0 is connected to an RRU via one or more optical fibers. This RAN deployment solution is referred to as centralized radio access network (centralized radio access network, C-RAN). In the C-RAN deployment solution, an RRU is not located in the central office but is deployed on a remote signal tower. Therefore, in this case, a distance between the RRU and an AU is shorter, allowing the RRU and AU to be integrated into a large-scale active antenna unit (active antenna unit, AAU), and deployment costs are effectively reduced through the centrally deployed AAU.

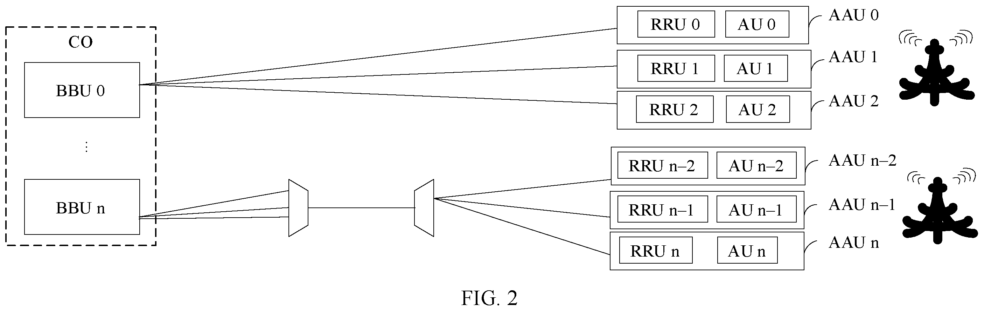

For example, FIG. 2 is a diagram of a C-RAN deployment solution according to an embodiment of this application. Specifically, a plurality of BBUs (a BBU 0 to a BBU n) are centrally deployed in one CO, and an RRU is deployed on a remote signal tower and is very close to an AU (where the RRU and the AU are integrated into an AAU module). Each BBU is connected to an RRU via one or more optical fibers, in other words, each BBU is connected to the AAU via one or more optical fibers. For example, refer to FIG. 2. The BBU 0 is connected to an AAU 0, an AAU 1, and an AAU 2 via three optical fibers, and the BBU n is connected to an AAU n-2, an AAU n-1, and an AAU n in a passive wavelength division multiplexing (wavelength division multiplexing, WDM) manner.

In actual application scenarios, RRUs are mostly deployed through conventional macro sites (for example, tower sites). However, there are still a large quantity of scenarios in which the conventional macro site is not suitable for deployment. For example, in an ancient town scenic area, it is challenging to deploy conventional macro sites due to the age of buildings in the ancient town scenic area, their limited load-bearing capacity, small installation space, and high aesthetic requirements for deployed devices. In this case, it is difficult to deploy the RRU, signal coverage is poor, affecting user experience.

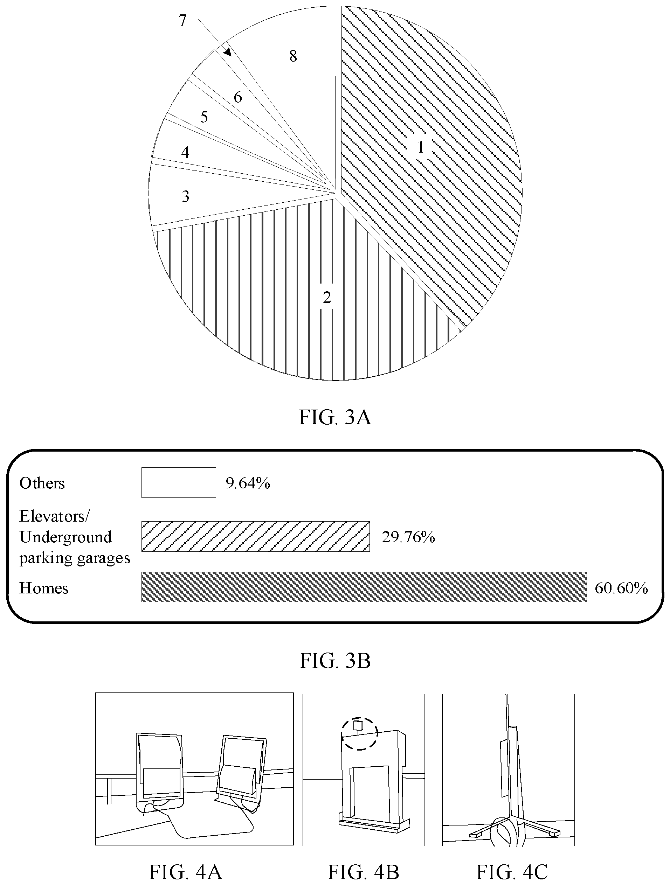

For example, FIG. 3A and FIG. 3B are statistical charts of signal coverage according to an embodiment of this application. Specifically, FIG. 3A is a statistical chart of distribution of signal coverage black spots (that is, signal blind spots) in scenarios. The scenarios include: townships and rural areas (a sector area 1 in the figure), residential areas (a sector area 2 in the figure), roads (a sector area 3 in the figure), schools (a sector area 4 in the figure), commercial centers (a sector area 5 in the figure), industrial parks (a sector area 6 in the figure), transportation hubs (sector-shaped area 7 in the figure), and other scenarios (a sector area 8 in the figure). Residential areas and townships and rural areas are two scenarios with largest proportions of signal coverage black spots, and are therefore main sources of signal coverage black spots. FIG. 3B shows a statistics of user complaints about mobile Internet access in various scenarios as collected by an operator. Homes are a scenario with a largest quantity of user complaints about mobile Internet access, accounting for 60.60%. Elevators/underground parking garages are also scenarios with a relatively large quantity of user complaints about mobile Internet access, accounting for 29.76%. Other scenarios with a relatively large quantity of user complaints about mobile Internet access account for 9.64%.

For the foregoing reasons, due to small sizes and ease of deployment of pole micro sites, pole micro sites are gradually used to deploy RRUs in scenarios such as residential areas, commercial streets, and squares. Usually, the pole micro sites may be deployed using an inside-residential-area coverage solution or an outside-residential-area coverage solution.

For example, FIG. 4A to FIG. 4C are diagrams of deployment scenarios of pole micro sites according to an embodiment of this application. Specifically, with reference to FIG. 4A to FIG. 4C, the pole micro sites include a spotlight and spotlight antenna (that is, FIG. 4A), an EasyMacro pole micro site (that is, FIG. 4B) and a BookRRU pole micro site (that is, FIG. 4C).

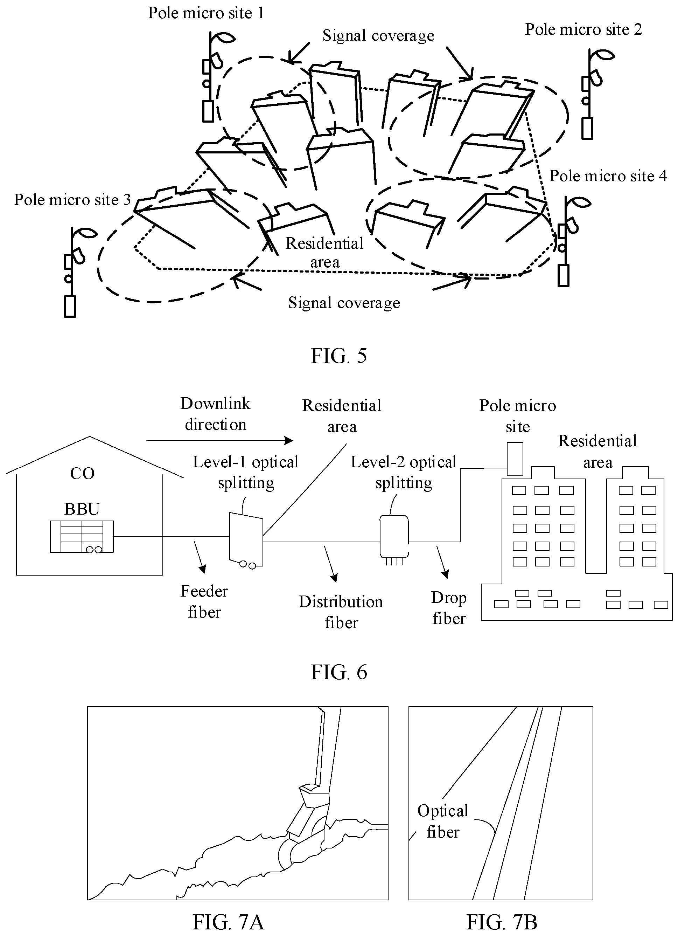

For example, FIG. 5 is a diagram of an outside-residential-area coverage solution of a pole micro site according to an embodiment of this application. Specifically, with reference to FIG. 5, the coverage solution includes four pole micro sites deployed outside a residential area: a pole micro site 1, a pole micro site 2, a pole micro site 3, and a pole micro site 4. Each pole micro site has corresponding signal coverage (with reference to four circular dashed-line areas in FIG. 5). The pole micro sites are deployed outside the residential area, allowing the signal coverage to encompass the residential area and thereby improving signal coverage of the residential area.

However, when the pole micro sites in the foregoing solution are deployed outside the residential area, a loss caused by the need of a signal to penetrate walls a plurality of times is high (a specific degree of loss is caused each time the signal penetrates a wall). In addition, the pole micro sites provide limited signal coverage. It is difficult to implement signal coverage in an area inside the residential area or signal coverage is usually poor in an area inside the residential area. Therefore, it is difficult to implement full-area signal coverage in the residential area using the foregoing solution, and an indoor signal coverage depth is insufficient in this solution.

Based on the architecture shown in FIG. 2, for example, FIG. 6 is a diagram of an inside-residential-area coverage solution of a pole micro site according to an embodiment of this application. In the coverage solution, an RRU (a pole micro site) is deployed based on the C-RAN communication network architecture, to implement networking between a BBU and the RRU. Specifically, with reference to FIG. 6, the BBU deployed in a central office is connected to an input end of a level-1 optical splitting device via a feeder fiber, one output end of the level-1 optical splitting device is directly connected to a residential area via a distribution fiber, another output end of the level-1 optical splitting device is connected to an input end of a level-2 optical splitting device via a distribution fiber, and an output end of the level-2 optical splitting device is connected to a pole micro site in another residential area via a drop fiber. Optionally, the optical splitting device includes an optical splitter and a fiber distribution terminal.

With reference to FIG. 6, optical signals sent by the BBU can be transmitted to the input end of the level-1 optical splitting device along the feeder fiber. One part of the optical signals are transmitted from the one output end of the level-1 optical splitting device to the residential area along the distribution fiber. The other part of the optical signals are transmitted from the another output end of the level-1 optical splitting device to the input end of the level-2 optical splitting device along the distribution fiber, and then are transmitted from the output end of the level-2 optical splitting device to the pole micro site in the another residential area along the drop fiber. It is not difficult to understand that an optical signal transmission process in a downlink direction is merely used as an example herein. An optical signal transmission process in an uplink direction is similar, and details are not described herein again.

As a result, in the foregoing solution, a structure is simple, no additional device is needed, and point-to-point transmission can be performed via optical fibers used between the BBU and the RRU, thereby implementing fiber direct connection. In addition, in the foregoing solution, the pole micro site is deployed inside the residential area, allowing signal coverage of the pole micro site to encompass the inside of the residential area and thereby improving a signal coverage depth.

However, because the RRU and the BBU (that is, the pole micro site) need to be connected via the optical fibers, optical fiber deployment is needed to adopt this solution, which presents significant construction challenges (for example, deploying optical fibers in an old residential area requires excavation) and results in high deployment costs. For example, FIG. 7A and FIG. 7B are diagrams of a deployment scenario of an inside-residential-area coverage solution of a pole micro site according to an embodiment of this application. Specifically, with reference to FIG. 7A, in the foregoing solution (refer to FIG. 6), optical fiber deployment is usually needed, to implement a connection between a BBU and an RRU. In an old residential area, deploying optical fibers requires excavation, but a property management company demands no damage to roads or walls. This necessitates continuous negotiations, making construction challenging. In a new residential area, cable conduits are generally available, but the cable conduits are usually owned by a developer. This also necessitates corresponding negotiations, making optical fiber deployment difficult. Specifically, with reference to FIG. 7B, excavation is needed to lay optical fibers.

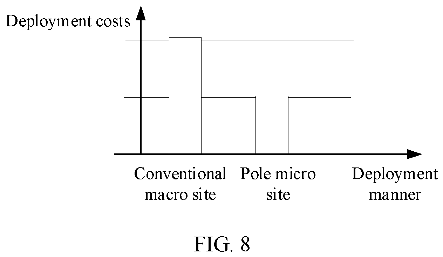

For example, FIG. 8 is a statistical chart of deployment costs of an RRU coverage solution according to an embodiment of this application. In FIG. 8, a horizontal coordinate indicates a deployment manner, a vertical coordinate indicates a deployment cost, and the deployment manner includes a conventional macro site and a pole micro site. Specifically, with reference to FIG. 8, deployment costs of the pole micro site are far lower than deployment costs of the conventional macro site, and are about half of the deployment costs of the conventional macro site. Compared with a deployment solution in which the conventional macro site is deployed, deploying the pole micro site can greatly reduce deployment costs in a scenario in which a residential area has a conduit and cabling space. However, in a scenario such as an old residential area having no conduit or cabling space, optical fibers need to be laid out through excavation, which greatly increases the deployment costs of the pole micro site.

Generally, based on the architecture shown in FIG. 1, an access manner of an access network is fiber to the x (fiber to the x, FTTx), and the access network is also referred to as an optical access network (optical access network, OAN). The fiber to the x includes fiber to the home (fiber to the home, FTTH), fiber to the building (fiber to the building, FTTB), and the like. Among them, the fiber to the x is commonly implemented by a passive optical network (passive optical network, PON).

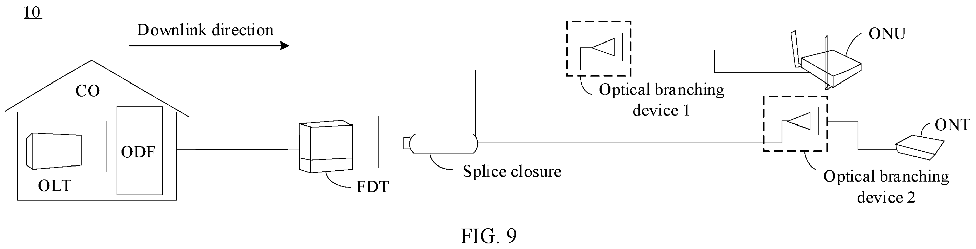

In this case, the pole micro site may be deployed by using a network architecture of a deployed passive optical network. For example, FIG. 9 is a diagram of networking of a passive optical network (passive optical network, PON) 10 according to an embodiment of this application. Specifically, a downlink direction is used as an example. The PON 10 includes an optical line terminal OLT disposed at a central control station, an optical network terminal ONT and an optical network unit ONU that are disposed at a user side. The ONT and the ONU are disposed in different locations on the user side, to implement similar functions.

In a possible implementation, with reference to FIG. 9, the PON 10 further includes an optical distribution frame (optical distribution frame, ODF) disposed in the central control station. The ODF is connected to the OLT, and is used for termination and distribution of a feeder optical cable in a central office in an optical fiber communication system, to conveniently implement connection, distribution, scheduling, and the like of an optical fiber line. Optionally, the PON 10 further includes a fiber distribution terminal/a fiber distribution terminal (fiber distribution terminal, FDT) connected to the central control station, configured to provide optical cable termination and cross-connection for a feeder-layer optical cable and a distribution-layer optical cable. Optionally, the PON 10 further includes a splice closure connected to the FDT, and a passive optical power splitter (splitter, SPL) that is connected between the splice closure and the ONT and between the splice closure and the ONU and that is configured to couple, split, and distribute an optical signal. Certainly, the passive optical power splitter may also be replaced by a device with a similar function, such as an optical splitter (also referred to as an optical splitter) or an optical branching device.

Devices in the passive optical network are all connected via optical fibers, and all these optical fibers can transmit an uplink optical signal and a downlink optical signal. It should be noted that the passive optical network shown in FIG. 9 is merely used as an example for description herein, and a device type, a device quantity, and the like included in the passive optical network should not be limited thereto.

Specifically, the downlink direction is used as an example. In the PON 10, an optical signal sent by the OLT is transmitted to the ODF along an optical fiber, an input end of the ODF receives the optical signal, the optical signal is transmitted from an output end of the ODF to an input end of the FDT along an optical fiber, and is transmitted from an output end of the FDT to the splice closure along an optical fiber. A part of the optical signal is transmitted to an input end of an optical branching device 1 along an optical fiber, and is transmitted from an output end of the optical branching device 1 to the ONU along an optical fiber. The other part of the optical signal is transmitted to an input end of an optical branching device 2 along an optical fiber, and is transmitted from an output end of the optical branching device 2 to the ONT along an optical fiber.

For ease of description, a process of transmitting the optical signal in the downlink direction is used as an example herein. In some other embodiments, in the uplink direction, the ONU or the ONT may also generate an optical signal to be sent to the OLT, and a process in which the ONT or the ONT generates the optical signal and sends the optical signal to the OLT is not described herein.

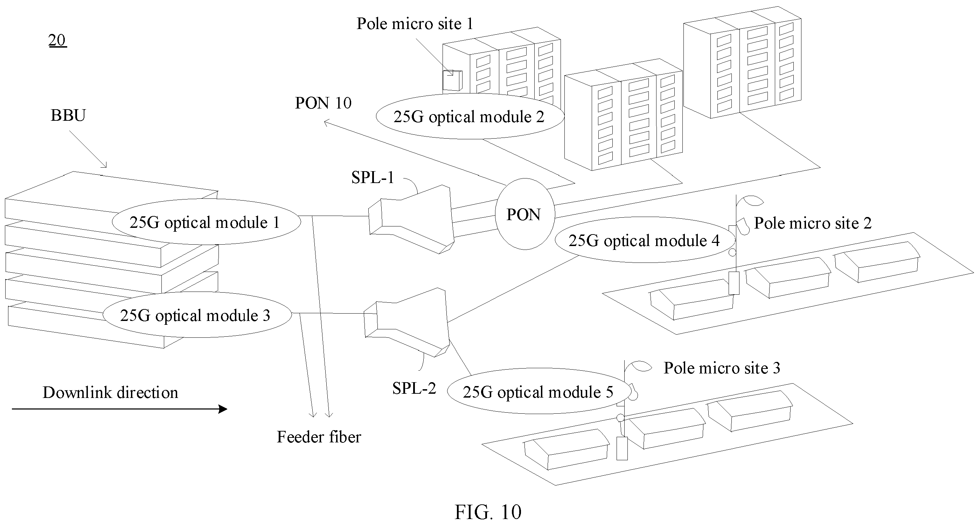

Based on the architecture shown in FIG. 9, the pole micro site can be deployed by using the network architecture (for example, the passive optical network) of the deployed optical fiber transmission network, so that a BBU can be connected to an RRU through a corresponding device (for example, the passive optical power splitter) and an apparatus (for example, a 10G or 25G optical module). For example, FIG. 10 is a diagram of an optical fiber communication network 20 according to an embodiment of this application. The optical fiber communication network 20 includes: a BBU, two passive optical power splitters (refer to an SPL-1 and an SPL-2 in FIG. 10), five 25G optical modules (refer to a 25G optical module 1, a 25G optical module 2, a 25G optical module 3, a 25G optical module 4, and a 25G optical module 5 in FIG. 10), three pole micro sites (refer to a pole micro site 1, a pole micro site 2, and a pole micro site 3 in FIG. 10), and a passive optical network (refer to a PON 10 shown in FIG. 9). The foregoing devices are connected to the devices (or modules) via optical fibers. Herein, the optical fiber communication network 20 shown in FIG. 10 is merely used as an example, and a communication device type included in the optical fiber communication network is not limited thereto. In a possible implementation, the 25G optical module may alternatively be another type of optical module, for example, a 10G optical module.

Specifically, with reference to FIG. 10, the BBU is connected to the 25G optical module 1, and is connected to an input end of the SPL-1 via a feeder fiber. An output end of the SPL-1 is connected to an input end of the PON 10 via an optical fiber. An output end of the PON 10 is connected to the 25G optical module 2 via an optical fiber. The 25G optical module 2 is connected to the pole micro site 1. The BBU is further connected to the 25G optical module 3, and is connected to an input end of the passive optical power splitter SPL-2 via a feeder fiber. An output end of the SPL-2 is separately connected to the 25G optical module 4 and the 25G optical module 4 via an optical fiber. The 25G optical module 4 is connected to the pole micro site 2, and the 25G optical module 5 is connected to the pole micro site 3.

For example, in a downlink direction, an optical signal sent by the BBU is first processed by a corresponding algorithm (for example, an optical digital signal processing (optical digital signal processor, oDSP) algorithm) executed by the 25G optical module. The optical signal is transmitted to the input end of the PON 10 through the SPL-1 along the feeder fiber, and then is transmitted from the output end of the PON 10 along the optical fiber to the 25G optical module 2, where it is processed by a corresponding algorithm executed by the 25G optical module 2 before being sent to the pole micro site 1. A signal transmission process in an uplink direction is similar to that in the downlink direction, and details are not described herein again. For ease of description, an optical signal transmission process between the BBU and the pole micro site 1 in the downlink direction is used as an example here, which should not constitute a limitation on another optical fiber transmission process in the optical fiber communication network 20.

It is not difficult to understand that the feeder fiber in FIG. 10 may reuse a currently deployed optical fiber, and the PON 10 may also reuse a deployed PON network (for example, the PON 10). The foregoing solution can effectively reduce a quantity of optical fibers in a communication network by using a deployed network architecture, thereby reducing costs and implementing low-cost deployment of pole micro sites.

Although, in principle, the foregoing technical solution may implement deployment of the pole micro site by using the deployed network architecture, thereby reducing costs to some extent, implementation of an optical module (for example, a 25G optical module) still faces significant challenges. For example, the optical module faces difficulties in implementing a corresponding algorithm (for example, an oDSP algorithm) in software, lack a chip of an appropriate size and suitable logic in hardware, and also have heat dissipation issues. The implementation of the optical module usually requires a customized dedicated chip, which is difficult and expensive to implement. Consequently, this hardware-dependent solution is costly, challenging to implement, and difficult to promote.

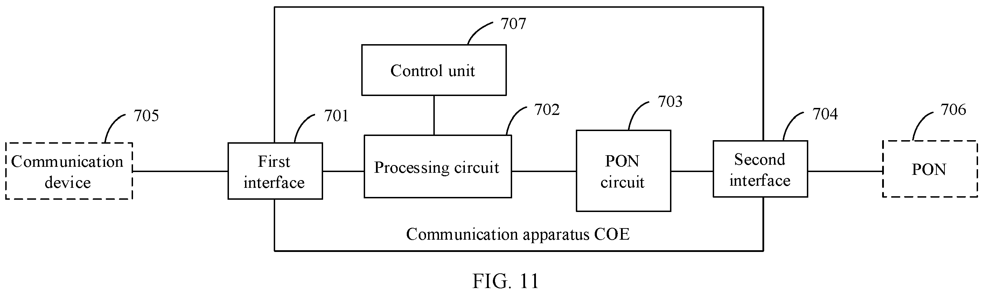

Based on the foregoing description, for example, FIG. 11 is a diagram of a communication apparatus according to this application. For ease of description, with reference to FIG. 11, the communication apparatus may be referred to as a communication apparatus (common public radio interface over Ethernet, COE). This is merely used as an example here, and should not constitute a limitation on a structure of the communication apparatus. Through this communication apparatus, a packet can be parsed from a received signal corresponding to a communication protocol, converted into a signal corresponding to another communication protocol, and output. As shown in FIG. 11, the communication apparatus includes a first interface (a first interface 701 in FIG. 11), a processing circuit (702 in FIG. 11), a PON circuit (703 in FIG. 11), and a second interface (a second interface 704 in FIG. 11). The processing circuit 702 is separately coupled to the first interface 701 and the PON circuit 703, the PON circuit 703 is coupled to the second interface 704, the first interface 701 is configured to be coupled to a communication device (for example, 705 in FIG. 11), and the second interface 704 is configured to be coupled to a passive optical network (for example, PON 706 in FIG. 11).

In a possible implementation, the PON 706 may use the architecture of the PON 10 shown in FIG. 9. In some other examples, the PON 706 may alternatively be another passive optical network. For ease of description, the communication apparatus shown in FIG. 11 is merely used as an example here, and should not constitute a limitation on an architecture of the passive optical network connected to the communication apparatus.

It is not difficult to understand that the communication apparatus COE can be further deployed in a different location of a communication network. Therefore, the first interface 701 may be further connected to another communication device. Optionally, the communication device 705 includes a BBU or an RRU. Optionally, the first interface 701 of the communication apparatus COE is connected to the BBU, and the PON circuit 703 performs an optical line terminal (OLT) function to convert a first packet into a first signal. In a possible implementation, the first interface 701 of the COE is connected to the RRU, and the PON circuit 703 performs an optical network unit (ONU) function to convert a second packet into a second signal.

Optionally, with reference to FIG. 11, the communication apparatus further includes a control unit 707. The control unit 707 is connected to the processing circuit 702, and is configured to control the communication apparatus to implement one or more of the following functions: startup, software loading, and upgrade.

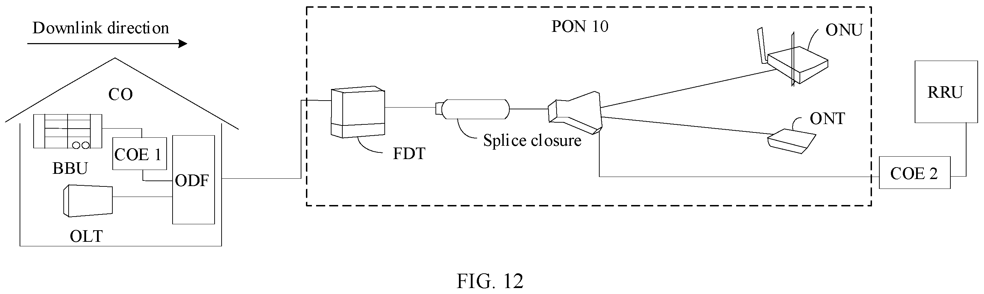

Based on the foregoing communication apparatus COE, for example, FIG. 12 is a diagram of a communication network according to an embodiment of this application. With reference to FIG. 12, an example in which the communication device connected to the first interface 701 of the communication apparatus COE is a BBU, and the second interface 704 is connected to the PON 10 is used. Specifically, the communication apparatus COE is deployed in a central office CO and is connected to the BBU in the CO, and is further deployed at a near end of an RRU and is connected to the RRU.

In a downlink direction, in the COE 1, the first interface 701 receives a signal (referred to as a first signal) transmitted by the BBU, and parses a corresponding packet (referred to as a first packet) from the first signal, where the first packet includes a packet of a first communication protocol. The processing circuit 702 converts the first packet obtained through parsing into a new packet (for example, referred to as a second packet), and the second packet includes a packet of a second communication protocol. The PON circuit 703 performs an OLT function to convert the second packet into a corresponding signal (for example, referred to as a second signal). The second interface 704 transmits the second signal to the PON 10. The second signal is transmitted to a COE 2 through the PON 10. In the COE 2, the second interface 704 receives the second signal transmitted by the PON 10, and parses the second packet from the second signal, where the second packet includes a packet of a second communication protocol. The processing circuit 702 converts the second packet obtained through parsing into the first packet, where the first packet includes the packet of the first communication protocol. The PON circuit 703 performs an ONU function, and converts the first packet into the first signal. The first interface 701 transmits the first signal to the RRU. For a signal transmission process of the PON 10 in FIG. 12, refer to FIG. 9. For ease of description, a signal transmission process in the downlink direction is used as an example herein. A signal transmission process in an uplink direction is similar to the signal transmission process in the downlink direction, and details are not described herein again.

In a possible implementation, optionally, the first communication protocol is different from the second communication protocol. The first communication protocol includes a common public radio interface (common public radio interface, CPRI) protocol, and the second communication protocol includes an Ethernet (ethernet, Eth) protocol.

Generally, a communication network in which a communication device is deployed is different from a communication protocol of the passive optical network. In this case, based on the communication apparatus in the foregoing solution, through communication protocol conversion, a packet in a signal transmitted by a communication device can be converted into a packet in a signal transmitted by a passive optical network. In this way, signal transmission can be performed between the communication device and the passive optical network, thereby implementing communication and improving signal transmission quality and efficiency. In addition, because a corresponding network architecture has been generally deployed in the passive optical network, signal transmission between communication devices in this solution can be implemented based on the existing network architecture of the passive optical network, without a need to deploy an additional device and cable, thereby achieving higher compatibility and effectively reducing deployment costs of the communication network.

It should be noted that FIG. 11 and FIG. 12 are merely possible implementations and deployment of the communication apparatus COE according to embodiments of this application. In some other examples, the communication apparatus COE further has another possible implementation and deployment manner.

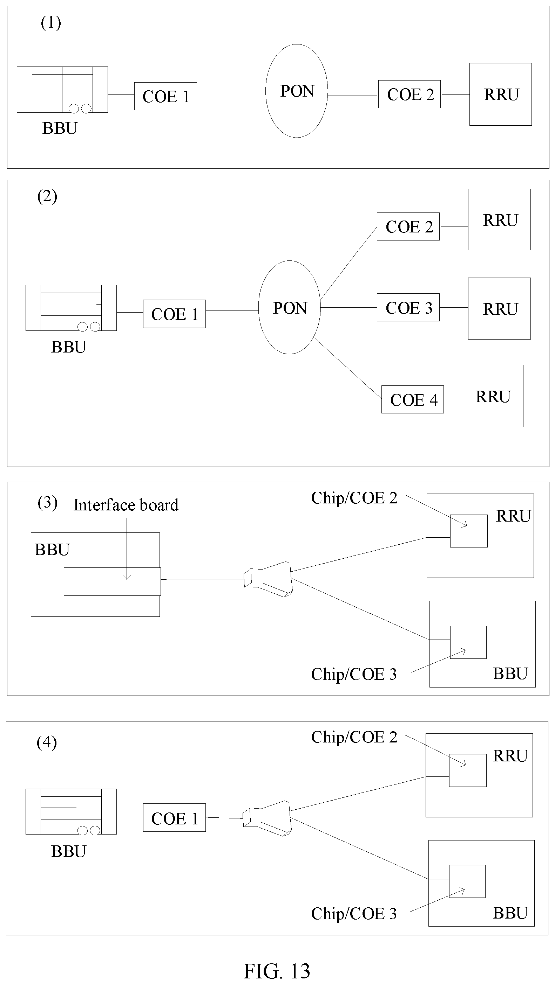

For example, FIG. 13 is a diagram of a communication network. Specifically, with reference to (1) in FIG. 13, two communication apparatuses COEs (that is, a COE 1 and a COE 2) are newly deployed between a BBU and an RRU. A first interface of the communication apparatus COE 1 is connected to the BBU, and a second interface of the communication apparatus COE 1 is connected to a PON network. A first interface of the communication apparatus COE 2 is connected to the RRU, and both the second interface of the COE 1 and a second interface of the COE 2 are connected to the PON network (including a passive communication device). A connection medium corresponding to the foregoing connection relationship is an optical fiber. A function of the communication apparatus COE is implemented by a logic unit, and an OLT function or an ONU function of a PON circuit is implemented by a PON chip. In this way, the solution can use a commonly used chip and a logic device, so that the communication apparatus can be implemented with low costs.

With reference to (2) in FIG. 13, a communication apparatus COE 1 is newly deployed on a BBU side, and three communication apparatuses COEs (that is, a COE 2, a COE 3, and a COE 4) are newly deployed on an RRU side. A first interface of the communication apparatus COE 1 is connected to the BBU, and a second interface of the communication apparatus COE 1 is connected to a PON network. Second interfaces of the communication apparatus COE 2, the COE 3, and the COE 4 are all connected to the PON network (including a passive communication device), and first interfaces of the communication apparatus COE 2, the COE 3, and the COE 4 are all connected to RRUs. A connection medium corresponding to the foregoing connection relationship is an optical fiber. In this way, in this solution, one communication apparatus COE is deployed on the BBU side, and one communication apparatus COE is deployed on any one RRU, so that the communication network can support point-to-multipoint networking.

With reference to (3) in FIG. 13, a communication apparatus COE 1 is newly deployed on a BBU side, and two communication apparatuses COEs (that is, a COE 2 and a COE 3) are newly deployed on an RRU side. The communication apparatus COE 1 is implemented by adding an interface board to a BBU device, or integrating a PON function into a main control board of the BBU device. The communication apparatuses COE 2 and COE 3 each are implemented by integrating a chip in an RRU device to support the PON function. In this case, in the foregoing solution, no additional communication apparatus COE is needed, and a new implementation of the communication apparatus COE on the BBU side and the RRU side can be provided (the interface board is added on the BBU side, and the chip is integrated on the RRU side), thereby effectively reducing implementation difficulty of the communication apparatus COE. However, the foregoing solution requires support of newly developed hardware. For example, a newly developed interface board is needed on the BBU side to support the PON function, and a corresponding PON processing chip needs to be integrated on the RRU side.

With reference to (4) in FIG. 13, a communication apparatus COE 1 is newly deployed on a BBU side, and two communication apparatuses COEs (that is, a COE 2 and a COE 3) are newly deployed on an RRU side. The communication apparatus COE 1 is implemented by deploying one communication apparatus COE. The communication apparatuses COE 2 and COE 3 each are implemented by deploying an optical module integrated with an ONU function. In this case, the foregoing solution can provide a new implementation of the communication apparatus COE on the RRU side (by using the optical module with the ONU function), so that there are more possibilities in implementing the communication apparatus COE, achieving flexible deployment.

It should be noted that, the architectures shown in FIG. 13 are merely examples herein to describe other possible implementations and deployment manners of the communication apparatus, and should not constitute a limitation on a deployment location, an implementation, and the like of the communication apparatus. For example, based on the architecture shown in (4) in FIG. 13 (that is, the communication apparatus COE on the RRU side may be implemented by using the optical module integrated with the ONU function), it is further extendable to consider integrating the 3rd generation partnership project (the 3rd generation partnership project, 3GPP) standard cellular network with an optical modem (for example, the ONT in FIG. 12) in a home PON network. In this way, the communication apparatus COE is in a form of the optical module, and can be used to implement deep coverage of an indoor cellular network, to resolve a serious complaint due to poor user voice experience caused by weak signal coverage strength of the indoor cellular network. In addition, in this solution, no RRU site is needed, and power supply can be resolved, thereby simplifying deployment of the communication network.

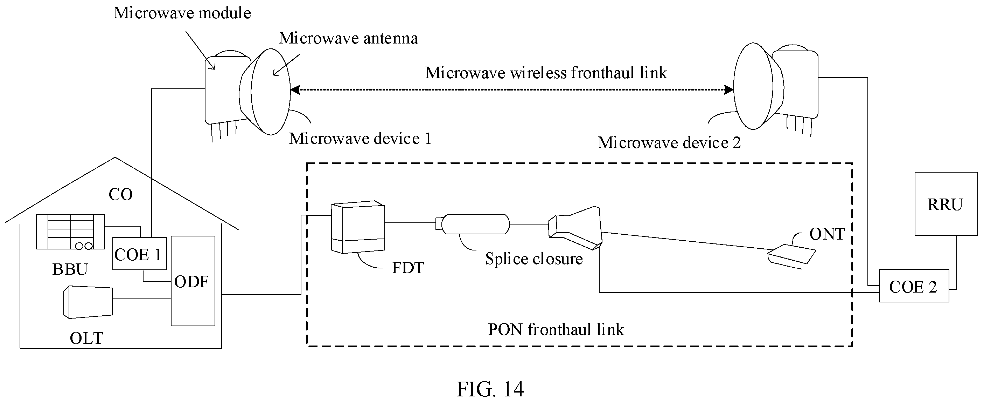

Certainly, the 3GPP standard cellular network in the foregoing solution may alternatively be a communication network of another standard, such as a global system for mobile communications (global system for mobile communications, GSM), a universal mobile telecommunications system (universal mobile telecommunications system, UMTS), or long term evolution (long term evolution, LTE). In addition, based on the architecture shown in FIG. 12, for example, FIG. 14 is a diagram of a communication network. A communication apparatus COE can further be extended to support providing a microwave wireless fronthaul link by using a microwave device. With reference to a microwave device 1 shown in FIG. 14, the microwave device 1 includes two parts: a microwave module and a microwave antenna. Specifically, on a BBU side, the microwave device 1 is newly deployed, and the microwave device 1 is connected to a COE 1. On an RRU side, a microwave device 2 is newly deployed, and the microwave device 2 is connected to a COE 2. The microwave wireless fronthaul link is formed by using the deployed microwave devices.

In this case, the extended function provided in the foregoing solution includes the following two functions: First, the foregoing solution can implement a load sharing function. For example, a requirement for fronthaul bandwidth is high, fronthaul bandwidth of a PON fronthaul link is heavily occupied by an ONU, and the microwave wireless fronthaul link formed by newly deployed microwave devices may provide corresponding bandwidth. In addition, the foregoing solution may further implement a backup function. For example, if a communication link (including a microwave wireless fronthaul link and a PON fronthaul link) in the communication network is interrupted, another communication link can be used to ensure signal transmission, thereby implementing backup and replacement functions.

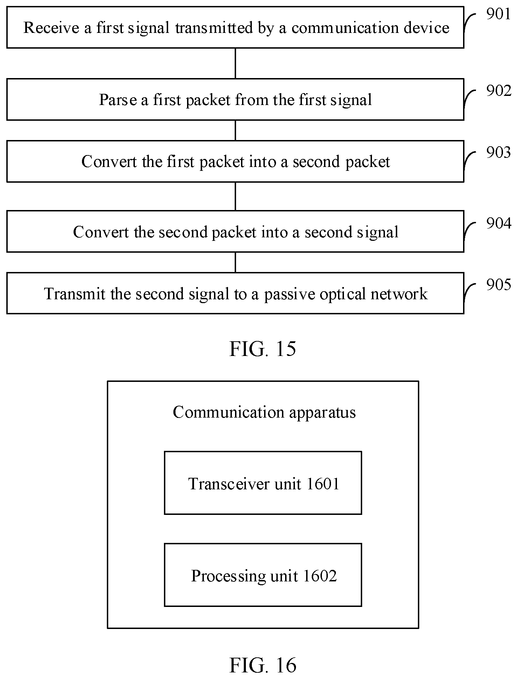

Based on the architecture shown in FIG. 11, an embodiment of this application provides a communication method, to parse a packet from a received signal corresponding to a communication protocol, and convert the packet into a signal corresponding to another communication protocol. For example, FIG. 15 is a diagram of a communication method. The following describes the communication method provided in this embodiment of this application in detail with reference to FIG. 15. It should be noted that the architecture shown in FIG. 11 is used as an example herein to describe the communication method provided in this embodiment of this application, and should not constitute a limitation on the communication method provided in this embodiment of this application. The communication method includes step 901 to step 905. The communication method is applied to a communication apparatus. The following provides detailed descriptions by using an example in which the communication method is applied to the communication apparatus. The detailed descriptions are as follows:
Step 901: Receive a first signal transmitted by a communication device.

With reference to FIG. 15, the first signal transmitted by the communication device is received. Specifically, based on the architecture shown in FIG. 11, the first interface 701 in the communication apparatus COE receives a first signal transmitted by the communication device BBU.

Optionally, the communication device includes a baseband unit and a remote radio unit.

Step 902: Parse a first packet from the first signal.

With reference to FIG. 15, the first packet is parsed out from the first signal. Specifically, based on the architecture shown in FIG. 11, the communication apparatus COE parses the first packet from the first signal, where the first packet includes a packet of a first communication protocol.

Step 903: Convert the first packet into a second packet.

With reference to FIG. 15, the first packet is converted into the second packet. Specifically, based on the architecture shown in FIG. 11, the processing circuit 702 in the communication apparatus COE converts the first packet into a second packet, where the second packet includes a packet of a second communication protocol.

Optionally, the first communication protocol is different from the second communication protocol. In a possible implementation, the first communication protocol includes a common public radio interface protocol, and the second communication protocol includes an Ethernet protocol.

Step 904: Convert the second packet into a second signal.

With reference to FIG. 15, the second packet is converted into the second signal. Specifically, based on the architecture shown in FIG. 11, the processing circuit 702 in the communication apparatus COE converts the second packet into a second signal.

With reference to step 901, in a possible implementation, the communication device includes the baseband unit, and the PON circuit 703 in the communication apparatus COE performs an optical line terminal function to convert the second packet into the second signal. Optionally, the communication device further includes the remote radio unit, and the PON circuit 703 in the communication apparatus COE performs an optical network unit function to convert the second packet into the second signal.

Step 905: Transmit the second signal to a passive optical network.

With reference to FIG. 15, the second signal is transmitted to the passive optical network. Specifically, based on the architecture shown in FIG. 11, the second interface 704 in the communication apparatus COE transmits the second signal to the passive optical network.

Generally, signal transmission between communication devices is mainly implemented via a cable or in a wireless manner, and an optical fiber is used as a transmission medium in the passive optical network to implement signal transmission. Therefore, the communication device and the passive optical network have different transmission media, and a communication protocol corresponding to the communication device is different from a communication protocol corresponding to the passive optical network, so that signal transmission cannot be implemented. However, according to the foregoing communication method, a packet of the communication protocol corresponding to the communication device can be converted into a packet of the communication protocol corresponding to the passive optical network, to implement protocol conversion of the packet, and the new packet is converted into a corresponding signal and output to the passive optical network.

In this case, based on the communication method in the foregoing solution, through communication protocol conversion, a packet in a signal transmitted by the communication device can be converted into a packet in a signal transmitted by the passive optical network. In this way, signal transmission can be performed between the communication device and the passive optical network, thereby implementing communication and improving signal transmission quality and efficiency. Further, because a corresponding network architecture has been generally deployed in the passive optical network, signal transmission between communication devices in this solution can be implemented based on the existing network architecture of the passive optical network, without a need to deploy an additional device and cable, thereby achieving higher compatibility and effectively reducing deployment costs of the communication network.

For example, FIG. 16 is a diagram of a communication apparatus according to an embodiment of this application. Alternatively, the communication apparatus may be a module or a chip in a communication device, and the communication device may be a chip or a system on chip. The communication apparatus includes a transceiver unit 1601 and a processing unit 1602. The transceiver unit 1601 is configured to receive a first signal transmitted by the communication device, and parse a first packet from the first signal, where the first packet includes a packet of a first communication protocol, and is further configured to transmit a second signal to a passive optical network. The processing unit 1602 is configured to convert the first packet obtained by the transceiver unit 1601 into a second packet, where the second packet includes a packet of a second communication protocol, and is further configured to convert the second packet into the second signal.

The transceiver unit 1601 is further configured to perform the communication method in step 901, step 902, and step 905. The processing unit 1602 is further configured to perform the communication method in step 903 and step 904. It may be understood that the functions and effects of the communication method shown in FIG. 15 may be directly cited in this communication apparatus. Details are not described herein again.

In a possible implementation, an embodiment of this application further provides a communication apparatus. The communication apparatus may be a chip or a chip system. The communication apparatus includes a processor and an interface circuit. The processor is configured to read instructions to perform the method in any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include the memory. When the communication apparatus is a chip system, the communication device may include a chip, or may include a chip and another discrete component. This is not specifically limited in this embodiment of this application.

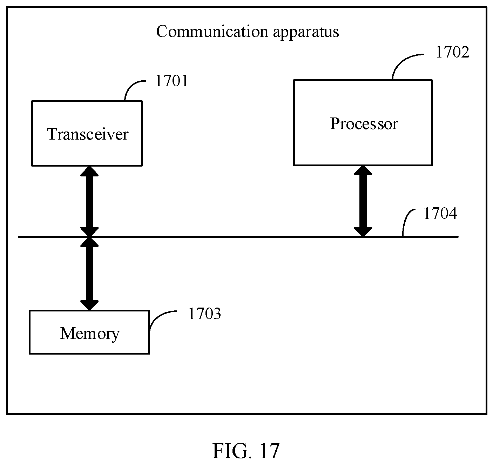

For example, FIG. 17 is a diagram of a communication apparatus according to an embodiment of this application. Specifically, the communication apparatus includes one or more transceivers 1701 and one or more processors 1702. For example, the transceiver 1701 is configured to perform functions or steps implemented by the first interface 701 and the second interface 704 shown in FIG. 11, and the processor 1702 is configured to perform functions or steps implemented by the processing circuit 702 and the PON circuit 703 shown in FIG. 11. For specific descriptions of the transceiver 1701 and the processor 1702, refer to FIG. 15 or the foregoing method embodiments. Details are not described herein again.

In the foregoing embodiments, for specific descriptions of terms, steps, or the like, refer to the descriptions in the foregoing method embodiments. Details are not described herein again.

In the implementations of the communication apparatus shown in FIG. 17, the transceiver may include a receiver. The transceiver is configured to perform an obtaining function in the foregoing description. The obtaining function may specifically include receiving. For example, the receiver is configured to perform a receiving function (or an operation). In addition, the transceiver is configured to communicate with another device/apparatus through a transmission medium.

Optionally, the communication apparatus may further include one or more memories 1703, configured to store program instructions and/or data. The memory 1703 is coupled to the processor 1702. The coupling in this embodiment of this application may be an indirect coupling or a communication connection between apparatuses, units, or modules in an electrical form, a mechanical form, or another form, and is used for information exchange between the apparatuses, the units, or the modules. The processor 1702 may cooperate with the memory 1703. The processor 1702 may execute the program instructions stored in the memory 1703. Optionally, at least one of the one or more memories may be included in the processor.

In this embodiment of this application, a specific connection medium between the transceiver 1701, the processor 1702, and the memory 1703 is not limited. In this embodiment of this application, the memory 1703, the processor 1702, and the transceiver 1701 are connected via a bus 1704 in FIG. 17. The bus is represented by using a bold line in FIG. 17. A manner of connection between other components is merely an example for description, and is not limited thereto. The bus may be classified into an address bus, a data bus, a control bus, and the like. For ease of representation, the bus is indicated by only one bold line in FIG. 17, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor or any conventional processor or the like. The steps of the methods disclosed with reference to embodiments of this application may be directly performed by a hardware processor, or may be performed by using a combination of hardware and software modules in the processor.

In embodiments of this application, the memory may include but is not limited to a nonvolatile memory, for example, a hard disk drive (hard disk drive, HDD) or a solid-state drive (solid-state drive, SSD), a random access memory (random access memory, RAM), an erasable programmable read-only memory (erasable programmable read-only memory, EPROM), a read-only memory (read-only memory, ROM), a compact disc read-only memory (compact disc read-only memory, CD-ROM), or the like. The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

The processor 1702 is mainly configured to: process a communication protocol and communication data, control the entire communication apparatus, execute a software program, and process data of the software program. The memory 1703 is mainly configured to store the software program and the data. The transceiver 1701 may include a control circuit and an antenna. The control circuit is mainly configured to: perform conversion between a baseband signal and a radio frequency signal and process the radio frequency signal. The antenna is mainly configured to receive and send a radio frequency signal in a form of an electromagnetic wave. An input/output apparatus, such as a touchscreen, a display, or a keyboard, is mainly configured to: receive data entered by a user and output data to the user.

After the communication apparatus is powered on, the processor 1702 may read the software program in the memory 1703, interpret and execute instructions of the software program, and process the data of the software program. When data needs to be sent in a wireless manner, the processor 1702 performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 1702. The processor 1702 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

The communication apparatus shown in this embodiment of this application may further have more components than those in FIG. 17, or the like. This is not limited in this embodiment of this application. The methods performed by the processor and the transceiver are merely examples. For specific steps performed by the processor and the transceiver, refer to the methods described above.

In a possible implementation, an embodiment of this application provides a communication apparatus. The communication apparatus includes a processor and an interface circuit. The processor is coupled to the interface circuit. The processor is configured to: execute a computer program or instructions stored in a memory, and control the interface circuit to perform the communication method in any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include the memory. When the communication apparatus is a chip system, the communication device may include a chip, or may include a chip and another discrete component. This is not specifically limited in this embodiment of this application.

In a possible implementation, an embodiment of this application provides a communication device. The communication device includes: a circuit board, and the communication apparatus according to any one of the foregoing embodiments that is disposed on the circuit board. Optionally, the foregoing communication device includes any one of the following: a baseband unit, a remote radio unit, an optical line terminal, and an optical network unit.

In a possible implementation, an embodiment of this application provides a passive optical network. The passive optical network includes: an optical line terminal, at least one optical network unit, and at least one communication apparatus according to any one of the foregoing embodiments. Optionally, the optical line terminal includes the communication apparatus according to any one of the foregoing embodiments, and/or the optical network unit includes the communication apparatus according to any one of the foregoing embodiments.

All or some of the foregoing embodiments may be implemented by software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the claims and their equivalent technologies.

## Claims

1. A communication apparatus, comprising a first interface, a processing circuit, a PON circuit, and a second interface, wherein the processing circuit is separately coupled to the first interface and the PON circuit, and the PON circuit is coupled to the second interface;
the first interface is configured to be coupled to a communication device, and is specifically configured to: receive a first signal transmitted by the communication device, and parse a first packet from the first signal, wherein the first packet comprises a packet of a first communication protocol;
the processing circuit is configured to convert the first packet into a second packet, wherein the second packet comprises a packet of a second communication protocol;
the PON circuit is configured to convert the second packet into a second signal; and
the second interface is configured to be coupled to a passive optical network, and is specifically configured to transmit the second signal to the passive optical network.

2. The communication apparatus according to claim 1, wherein the first communication protocol is different from the second communication protocol.

3. The communication apparatus according to claim 1 or 2, wherein the first communication protocol comprises a common public radio interface protocol, and the second communication protocol comprises an Ethernet protocol.

4. The communication apparatus according to any one of claims 1 to 3, wherein the communication device comprises a baseband unit or a remote radio unit.

5. The communication apparatus according to claim 4, wherein the communication device comprises the baseband unit, and the PON circuit is specifically configured to perform an optical line terminal function to convert the second packet into the second signal.

6. The communication apparatus according to claim 4, wherein the communication device comprises the remote radio unit, and the PON circuit is specifically configured to perform an optical network unit function to convert the second packet into the second signal.

7. The communication apparatus according to any one of claims 1 to 6, wherein the communication apparatus further comprises a control circuit; and
the control circuit is connected to the processing circuit, and is configured to control the communication apparatus to implement one or more of the following functions: startup, software loading, and upgrade.

8. A communication apparatus, comprising a first interface, a processing circuit, a PON circuit, and a second interface, wherein the processing circuit is separately coupled to the first interface and the PON circuit, and the PON circuit is coupled to the second interface;
the second interface is configured to be coupled to a passive optical network, and is specifically configured to: receive a second signal transmitted by the passive optical network, and parse a second packet from the second signal, wherein the second packet comprises a packet of a second communication protocol;
the processing circuit is configured to convert the second packet into a first packet, wherein the first packet comprises a packet of a first communication protocol;
the PON circuit is configured to convert the first packet into a first signal; and
the first interface is configured to be coupled to a communication device, and is specifically configured to transmit the first signal to the communication device.

9. The communication apparatus according to claim 8, wherein the first communication protocol is different from the second communication protocol.

10. The communication apparatus according to claim 8 or 9, wherein the first communication protocol comprises a common public radio interface protocol, and the second communication protocol comprises an Ethernet protocol.

11. The communication apparatus according to any one of claims 8 to 10, wherein the communication device comprises a baseband unit or a remote radio unit.

12. The communication apparatus according to claim 11, wherein the communication device comprises the baseband unit, and the PON circuit is specifically configured to perform an optical line terminal function to convert the second packet into the second signal.

13. The communication apparatus according to claim 11, wherein the communication device comprises the remote radio unit, and the PON circuit is specifically configured to perform an optical network unit function to convert the second packet into the second signal.

14. The communication apparatus according to any one of claims 8 to 13, wherein the communication apparatus further comprises a control circuit; and
the control circuit is connected to the processing circuit, and is configured to control the communication apparatus to implement one or more of the following functions: startup, software loading, and upgrade.

15. A communication method, comprising:
receiving a first signal transmitted by a communication device, and parsing a first packet from the first signal, wherein the first packet comprises a packet of a first communication protocol;
converting the first packet into a second packet, wherein the second packet comprises a packet of a second communication protocol;
converting the second packet into a second signal; and
transmitting the second signal to a passive optical network.

16. The communication method according to claim 15, wherein the first communication protocol is different from the second communication protocol.

17. The communication method according to claim 15 or 16, wherein the first communication protocol comprises a common public radio interface protocol, and the second communication protocol comprises an Ethernet protocol.

18. The communication method according to claim 15, wherein the communication device comprises a baseband unit, and converting the second packet into the second signal comprises:
performing an optical line terminal function to convert the second packet into the second signal.

19. The communication method according to claim 15, wherein the communication device comprises a remote radio unit, and converting the second packet into the second signal comprises:
performing an optical network unit function to convert the second packet into the second signal.

20. A communication method, comprising:
receiving a second signal transmitted by a passive optical network, and parsing a second packet from the second signal, wherein the second packet comprises a packet of a second communication protocol;
converting the second packet into a first packet, wherein the first packet comprises a packet of a first communication protocol;
converting the first packet into a first signal; and
transmitting the first signal to a communication device.

21. The communication method according to claim 20, wherein the first communication protocol is different from the second communication protocol.

22. The communication method according to claim 20 or 21, wherein the first communication protocol comprises a common public radio interface protocol, and the second communication protocol comprises an Ethernet protocol.

23. The communication method according to claim 20, wherein the communication device comprises a baseband unit, and converting the first packet into the first signal comprises:
performing an optical line terminal function to convert the first packet into the first signal.

24. The communication method according to claim 20, wherein the communication device comprises a remote radio unit, and converting the first packet into the first signal comprises:
performing an optical network unit function to convert the first packet into the first signal.

25. A communication device, comprising a circuit board, and the communication apparatus according to any one of claims 1 to 14 that is disposed on the circuit board.

26. The communication device according to claim 25, wherein the communication device comprises any one of the following: a baseband unit, a remote radio unit, an optical line terminal, and an optical network unit.

27. A passive optical network, comprising an optical line terminal, at least one optical network unit, and at least one communication apparatus according to any one of claims 1 to 14.

28. The passive optical network according to claim 27, wherein the optical line terminal comprises the communication apparatus according to any one of claims 1 to 14, and/or the optical network unit comprises the communication apparatus according to any one of claims 1 to 14.
